# EUROPEAN PATENT APPLICATION

(11) **EP 4 692 417 A1**
(43) Date of publication of application: **11.02.2026**
(21) Application number: 24784970.6
(22) Date of filing: 05.04.2024
(51) Int. Cl.: C23C 22/00, C21D 8/12, C21D 9/46, C22C 38/00, C22C 38/06, H01F 1/147

(54) **INSULATING COATING FILM TREATMENT LIQUID FOR GRAIN-ORIENTED ELECTROMAGNETIC STEEL SHEET AND METHOD FOR PRODUCING GRAIN-ORIENTED ELECTROMAGNETIC STEEL SHEET**

(30) Priority: 05.04.2023 JP 2023061084
(71) Applicant: NIPPON STEEL CORPORATION, Tokyo 100-8071 (JP)
(72) Inventor: TAKATANI, Shinsuke, Tokyo 100-8071 (JP); TAKEDA, Kazutoshi, Tokyo 100-8071 (JP)
(74) Representative: Vossius & Partner Patentanwälte Rechtsanwälte mbB
(86) International application number: PCT/JP2024/014018
(87) International publication number: WO 2024/210188

(57) **Abstract**

Provided is a method for producing an insulation coating treatment liquid for a grain-oriented electrical steel sheet including: an adjusting process in which a K compound is added to colloidal silica to adjust a K₂O/SiO₂ ratio in mass% between an amount of K in terms of K₂O and an amount of Si in terms of SiO₂ in the colloidal silica to 0.5% or more and 10% or less, and a mixing process in which without adding chromate the colloidal silica having the K₂O/SiO₂ ratio adjusted and metal phosphate of one or more metals selected from among Al, Fe, Mg, Mn, Ni, Zn, Co, Mo, V, W, and Zr are mixed.

## Description

### TECHNICAL FIELD

The present invention relates to a method for producing an insulation coating treatment liquid for a grain-oriented electrical steel sheet, and a method for producing a grain-oriented electrical steel sheet by applying the insulation coating treatment liquid produced by the aforementioned method.

### BACKGROUND ART

Grain-oriented electrical steel sheets are steel sheets mainly used as the iron core of transformers and the like. Usually, a two-layer surface coating is formed on such a grain-oriented electrical steel sheet: a forsterite layer (also called primary coating), which is formed during high-temperature final annealing; and a phosphate coating, which is formed by baking after applying a treatment liquid composed mainly of phosphate during heat flattening of the steel sheet.

Phosphate coatings are required to provide electrical insulation to grain-oriented electrical steel sheets and to improve iron loss by reducing eddy current loss. In addition to insulation, various other properties such as corrosion resistance, heat resistance, slipperiness, and adhesion are also required for the phosphate coating. This is in order to facilitate various production processes when the grain-oriented electrical steel sheets are processed to make iron cores for transformers and other devices. For instance, if the phosphate coating has poor heat resistance, slipperiness, or adhesion, the phosphate coating may peel off during stress relief annealing in the production of the iron core, which prevents the phosphate coating from exhibiting its original insulation properties or worsens processability because the steel sheets cannot be stacked smoothly.

Furthermore, an important property of the insulation coating of the grain-oriented electrical steel sheet is that it applies tension to the steel sheets. When tension is applied to steel sheets, the iron loss of grain-oriented electrical steel sheets can be improved by facilitating magnetic wall movement. Tension can also reduce magnetostriction (one of the main causes of noise in transformers).

In order to improve the various properties of grain-oriented electrical steel sheets as described above, specifically, technologies such as those disclosed in the following Patent Documents 1 to 9 have been researched and developed.

For example, Patent Document 1 discloses that an insulation coating treatment liquid with a specific composition composed mainly of aluminum phosphate, chromate, and colloidal silica is applied to the forsterite film formed on the steel sheet surface after final annealing, and then baked. According to the technology disclosed in Patent Document 1, a high-tension insulation coating is formed on the steel sheet surface, thereby reducing the iron loss and magnetostriction of the grain-oriented electrical steel sheet.

In addition, Patent Document 2 discloses a method of applying a treatment liquid containing ultrafine colloidal silica particles with a particle diameter of 8 µm or less, primary phosphate, and chromate in specific proportions to a steel sheet, followed by baking the sheet. According to the technology disclosed in Patent Document 2, the high tension of the insulation coating can be maintained and, in addition, the lubricity of the coating can be improved.

Furthermore, Patent Document 3 discloses a technology for forming a high-tension insulation coating on the surface of a grain-oriented electrical steel sheet by applying a specific amount of an insulation coating composed mainly of phosphate, chromate, and colloidal silica with a glass transition point of 950°C to 1200°C.

According to the technologies disclosed in Patent Documents 1 to 3 above, it has been possible to form an insulation coating with various coating properties that are much better and with improved coating tension. However, all of the technologies disclosed in Patent Documents 1 to 3 contain chromate, a chromium compound, in the insulation coating. In recent years, with the focus on environmental issues, there has been societal demands to prohibit or restrict the use of compounds such as lead, chromium, and cadmium.

For this reason, technologies that enable the formation of effective insulation coatings without the abovementioned chromium compounds have been investigated. However, a problem with insulation coatings without chromium compounds is that they do not impart enough tension to the steel sheet.

As a method for solving the abovementioned problems, for example, Patent Document 4 discloses an insulation coating treatment method for a grain-oriented electrical steel sheet, in which a treatment liquid containing 20 parts by weight of colloidal silica in terms of SiO₂ content, 10 to 120 parts by weight of aluminum phosphate, 2 to 10 parts by weight of boric acid, and 4 to 40 parts by weight in total of one or more types selected from among sulfates of Mg, Al, Fe, Co, Ni, and Zn is baked at 300°C or higher.

In addition, Patent Document 5 discloses a technology relating to a coating agent for forming a coating that contains a mixture of boric acid and alumina sol, and a water-compatible organic solvent; this coating has a tension-imparting effect on grain-oriented electrical steel sheets.

In addition, Patent Document 6 discloses a technology in which one or more of organic acid salts of Ca, Mn, Fe, Mg, Zn, Co, Ni, Cu, B and Al are contained in a surface treatment agent for grain-oriented electrical steel sheets containing primary phosphates of Al, Mg, and Ca and colloidal silica. In addition, formate, acetate, oxalate, tartrate, lactate, citrate, succinate, and salicylate are exemplified as organic acid salts in Patent Document 6.

In addition, Patent Document 7 discloses a technology in which, in an insulation coating treatment agent for grain-oriented electrical steel sheets containing phosphate and colloidal silica, the metal components in the phosphate are a combination of specific proportions of divalent metal elements, trivalent metal elements, and metal elements having a valence of tetravalent or more.

Furthermore, Patent Document 8 discloses a grain-oriented electrical steel sheet including a steel sheet and an insulation coating that contains: a first metal phosphate which is metal phosphate of one or more metals selected from among Al, Fe, Mg, Mn, Ni, and Zn; a second metal phosphate which is metal phosphate of one or more metals selected from among Co, Mo, V, W, and Zr; and colloidal silica.

In addition, Patent Document 9 discloses an aqueous composition for coating grain-oriented electrical steel; the composition contains aluminum cations; manganese cations; dihydrogen phosphate, hydrogen phosphate and/or phosphate anions; colloidal silica; and optionally iron cations.

### LIST OF PRIOR ART DOCUMENTS

### PATENT DOCUMENT

Patent Document 1: JP48-39338A
Patent Document 2: JP61-41778A
Patent Document 3: JP11-071683A
Patent Document 4: JP54-143737A
Patent Document 5: JP7-278828A
Patent Document 6: JP2000-178760A
Patent Document 7: JP2010-13692A
Patent Document 8: WOO2017-057513 A1
Patent Document 9: JP2022-519691A

### SUMMARY OF INVENTION

### TECHNICAL PROBLEM

These proposals have improved the application of tension to steel sheets. However, the present inventors' research to date has shown that insulation coatings that do not contain a chromium compound also deteriorate in terms of moisture absorption resistance. Even with all of the above techniques, it has not been possible to achieve the same level of moisture absorption resistance as conventional coatings containing chromic acid, and there is still room for improvement.

The insulation coating on grain-oriented electrical steel sheet has to be capable of imparting a large tension to the surface of the steel sheet. In addition, the insulation coating on a grain-oriented electrical steel sheet is also required to have good moisture absorption resistance and good productivity.

The present invention was made to solve the aforementioned problems, and objectives thereof are to provide a method for producing an insulation coating treatment liquid for a grain-oriented electrical steel sheet that exhibit good moisture absorption resistance and, in addition, good productivity even when chromate is not included, and to provide a method for producing a grain-oriented electrical steel sheet by applying the insulation coating treatment liquid produced by the aforementioned method.

### SOLUTION TO PROBLEM

The gist of the present invention is as follows

(1) A method for producing an insulation coating treatment liquid for a grain-oriented electrical steel sheet according to an embodiment of the present invention includes:
   an adjusting process in which a K compound is added to colloidal silica to adjust a K₂O/SiO₂ ratio in mass% between an amount of K in terms of K₂O and an amount of Si in terms of SiO₂ in the colloidal silica to 0.5% or more and 10% or less, and
   a mixing process in which the colloidal silica having the K₂O/SiO₂ ratio adjusted and metal phosphate of one or more metals selected from among Al, Fe, Mg, Mn, Ni, Zn, Co, Mo, V, W, and Zr are mixed.
(2) A method for producing a grain-oriented electrical steel sheet according to another embodiment of the present invention includes:
   a coating process in which an insulation coating treatment liquid is applied to a surface of a steel sheet, and
   a baking process in which the insulation coating treatment liquid is baked to form an insulation coating,
   wherein the insulation coating treatment liquid is the insulation coating treatment liquid for a grain-oriented electrical steel sheet produced by the method described in (1) above, and
   wherein in the baking process, the baking soaking temperature is 800 to 1000°C and the soaking holding time is 10 to 60 seconds.

### ADVANTAGEOUS EFFECT OF INVENTION

According to the present invention, a grain-oriented electrical steel sheet with excellent moisture absorption resistance and productivity can be stably obtained.

### BRIEF DESCRIPTION OF DRAWINGS

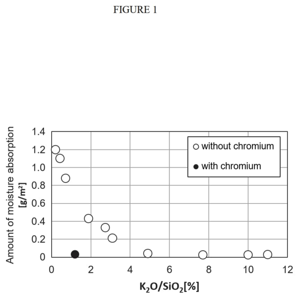

Figure 1 shows a relationship between the K₂O/SiO₂ ratio of the colloidal silica and the amount of moisture absorption.

### DESCRIPTION OF EMBODIMENTS

The present inventors investigated methods for improving the moisture absorption resistance of insulation coatings that do not contain a chromium compound. First, the present inventors wondered if the moisture absorption resistance could be improved by adjusting the crystallization temperature of colloidal silica. It is known that adding sodium hydroxide to colloidal silica lowers the crystallization temperature of the colloidal silica.

In previous studies, the present inventors have evaluated the moisture absorption resistance of insulation coatings made by using colloidal silica to which sodium hydroxide had been added in advance. Furthermore, the inventors have focused on potassium, which has properties similar to those of sodium, and wondered if the crystallization temperature of the colloidal silica could be lowered by adding potassium hydroxide to the colloidal silica.

Therefore, the present inventors evaluated the moisture absorption resistance of insulation coatings made by using colloidal silica to which potassium hydroxide had been added in advance. For comparison, a similar study was also carried out with the addition of potassium chloride.

The results of the preliminary experiments leading to the present invention are described below.

A final annealed grain-oriented electrical steel sheets with a thickness of 0.23 mm produced by a known method were sheared to a width of 60 mm and a length of 300 mm, and the annealing separator adhering to the surface was removed by rinsing, and the resulting sheets were used as base metals. Then, potassium hydroxide or potassium chloride was added to colloidal silica, and the K₂O/SiO₂ ratio in the colloidal silica was adjusted within a range of 0.2 to 11% to prepare 11 types of colloidal silica. Note that the "K₂O/SiO₂ ratio" is a percentage (%) obtained by quantifying the amount of K in terms of K₂O (hereinafter referred to as the "K₂O amount", unit: mass%) and the amount of Si in terms of SiO₂ (hereinafter referred to as the "SiO₂ amount", unit: mass%) contained in the colloidal silica respectively, and dividing the K₂O amount by the SiO₂ amount.

Then, an insulation coating treatment liquid consisting of 60 parts by mass of aluminum primary phosphate and 40 parts by mass of colloidal silica was applied to both sides of the base metals prepared above using a roll coater so that the coating amount after baking would be 4.5 g/m² per side. They were then baked at a temperature of 850°C for 30 seconds.

For comparison, an insulation coating treatment liquid consisting of 50 parts by mass of aluminum primary phosphate, 40 parts by mass of colloidal silica (the K₂O/SiO₂ ratio = 1.2%), and 10 parts by mass of chromic anhydride was similarly applied to the base metal and baked.

The resulting steel sheet was used as a test specimen to evaluate the moisture absorption resistance. First, the test specimen was placed in a thermo-hydrostat (temperature: 50°C, humidity: 90%) for one week, and the difference in weight before and after the thermo-hydrostat treatment was determined. The quantified weight difference was divided by the area of both sides of the test specimen, 0.036 m², which was defined as the amount of moisture absorption (unit: g/m²), and the moisture absorption resistance was evaluated using the amount of moisture absorption as an index.

Figure 1 shows the results of the above evaluation, organizing the relationship between the amount of moisture absorption and the K₂O/SiO₂ ratio. As shown in Figure 1, the steel sheet with a chromium-containing coating has a small K₂O/SiO₂ ratio; the amount of moisture absorption is 0.1 g/m² or less and almost no moisture is absorbed. In contrast, in the case of steel sheets having a coating that does not contain chromium, in the region where the K₂O/SiO₂ ratio is less than 0.5%, the moisture absorption amount exceeds 1.0 g/m², which is large, and sufficient moisture absorption resistance is not achieved. However, in regions where the K₂O/SiO₂ ratio is large, especially where the K₂O/SiO₂ ratio is 0.5% or more, the amount of moisture absorption is 1.0 g/m² or less regardless of whether potassium hydroxide or potassium chloride is used. Furthermore, in the region where the K₂O/SiO₂ ratio is 5.0% or more, almost no moisture is absorbed, and good moisture absorption resistance equivalent to that of steel the sheet coated with chromium-containing coating is achieved. On the other hand, when the K₂O/SiO₂ ratio exceeds 10%, it was confirmed that the dispersibility of colloidal silica deteriorates, resulting in an uneven appearance after baking.

Based on the above experimental results, the present inventors have found that in an insulation coating treatment liquid containing metal phosphate and colloidal silica, it is possible to provide high moisture absorption resistance by limiting the K₂O/SiO₂ ratio in colloidal silica to 0.5% or more and 10% or less and thereby promoting the formation reaction of the insulation coating.

As mentioned above, this experiment was based on the idea that the addition of potassium hydroxide to colloidal silica might lower the crystallization temperature of colloidal silica; however, in the present experiment, no change in crystallization temperature was observed when potassium chloride was added to colloidal silica. It is considered that the improvement in moisture absorption resistance is not due to the lowering of the crystallization temperature of colloidal silica, but rather due to some factor, the addition of potassium itself improves moisture absorption resistance.

### <Method for producing insulation coating treatment liquid for grain-oriented electrical steel sheet>

This section describes the configuration of the method for producing the insulation coating treatment liquid for a grain-oriented electrical steel sheet (hereinafter simply referred to as "insulation coating treatment liquid") according to the present embodiment and the reasons for its limitations.

The method for producing the insulation coating treatment liquid of the present embodiment includes an adjusting process for adjusting the composition of colloidal silica and a mixing process for mixing the colloidal silica and metal phosphate.

In the adjusting process, a K compound is added to colloidal silica to adjust the K₂O/SiO₂ ratio in mass % between K₂O amount and SiO₂ amount in the colloidal silica to 0.5% or more and 10% or less. If the K₂O/SiO₂ ratio is less than 0.5%, the effect of promoting the reaction of forming the insulation coating is small, resulting in insufficient moisture absorption resistance. On the other hand, if the K₂O/SiO₂ ratio exceeds 10%, the dispersibility of the colloidal silica deteriorates, resulting in an inferior appearance after baking. The K₂O/SiO₂ ratio is preferably 1% or more, more preferably 3% or more, and even more preferably 5% or more. The K₂O/SiO₂ ratio is preferably 8% or less, more preferably 7% or less, and even more preferably 6% or less.

There is no particular limitation to the method of adjusting the K₂O/SiO₂ ratio of colloidal silica to 0.5% or more and 10% or less; however, for example, a method of adding potassium hydroxide and/or potassium chloride to the colloidal silica in advance can be used. From the viewpoint of raising the pH of the insulation coating treatment liquid and thereby improving the dispersibility of the colloidal silica, it is preferable to add potassium hydroxide. It is also possible to add potassium permanganate to the colloidal silica in advance. However, potassium permanganate is a strong oxidizing agent and is highly reactive, so its use is not preferable from a safety standpoint. Therefore, it is preferable to exclude potassium permanganate as the K compound.

The size of colloidal silica (silica particles) used in the present embodiment is not particularly limited; however, the average particle diameter (average primary particle diameter) is preferably 4 to 35 nm. If the average particle diameter of the colloidal silica is less than 4 nm, the colloidal silica tends to aggregate and the stability of the insulation coating treatment liquid may deteriorate, or the insulation coating may become a porous one with large gaps, reducing the adhesion of the insulation coating, which is undesirable. On the other hand, if the average particle diameter of the colloidal silica is more than 35 nm, the colloidal silica becomes less reactive and the mixing of the phosphate as a binder and the colloidal silica may not be sufficient, or cracks may appear in the insulation coating to reduce adhesion, which is undesirable.

It is further preferred that the upper limit of the average particle diameter of the colloidal silica be set to 31 nm, 22 nm, 18 nm, or 12 nm because smaller particle diameters of colloidal silica form denser coatings and increase coating tension. In addition, it is even more preferred that the surface of the colloidal silica be chemically treated with aluminum. The average particle diameter (average primary particle diameter) of the colloidal silica can be determined, for example, by conversion from the specific surface area measured by the BET adsorption method (according to JIS Z8830).

In the mixing process, colloidal silica, the components of which have been adjusted in the adjusting process, and metal phosphate are mixed. The abovementioned metal phosphate is metal phosphate of one or more metals selected from among Al, Fe, Mg, Mn, Ni, Zn, Co, Mo, V, W, and Zr. It is preferred that the metal phosphate be metal phosphate of one or more metals selected from among Al, Mg, Ni, V, and W. This is because, when these phosphates are selected, a flat and uniform appearance can be achieved over a wide range of baking conditions. In the mixing process, it is preferable not to actively add chromates, taking environmental issues into consideration.

In the method for producing an insulation coating treatment liquid according to the present embodiment, the ratio of metal phosphate and colloidal silica is not particularly limited. As long as the K₂O/SiO₂ ratio in the colloidal silica is 0.5% or more and 10% or less, the insulation coating of the grain-oriented electrical steel sheet using the insulation coating treatment liquid produced by the method of the present embodiment exhibits excellent properties. The following are examples of preferred values.

The content of colloidal silica in the insulation coating treatment liquid in terms of SiO₂ is preferably 25.0 to 65.0 mass% of the total mass of the insulation coating treatment liquid in terms of solid content. If the content of colloidal silica in the insulation coating treatment liquid is less than 25.0 mass%, the coating tension of the insulation coating may not be sufficient, which is undesirable. If the content of colloidal silica in the insulation coating treatment liquid exceeds 65.0 mass%, the adhesion of the insulation coating may decrease, which is undesirable. The content of colloidal silica in the insulation coating treatment liquid is more preferably 27.0 mass% or more, and even more preferably 35.0 mass% or more, 40.0 mass% or more, or 45.0 mass% or more in terms of solid content, relative to the total mass of the insulation coating treatment liquid. The content of colloidal silica in the insulation coating treatment liquid is more preferably 58.0 mass% or less, even more preferably 55.0 mass% or less, or even more preferably 50.0 mass% or less.

In addition, the insulation coating treatment liquid according to the present embodiment is composed mainly of metal phosphate and colloidal silica, and is used to form a phosphate coating. Therefore, the content of the metal phosphate in the insulation coating treatment liquid in terms of H₂PO₄ is preferably 28.0 to 75.0 mass% of the total mass of the insulation coating treatment liquid in terms of solid content.

In the above mixing process, inorganic compounds including various oxides such as titanium oxide and molybdenum oxide, boric acid, sodium borate, pigments, and barium titanate may be further mixed. However, the content of components other than colloidal silica and phosphate in the insulation coating treatment liquid in terms of solid content is preferably 20.0 mass% or less, more preferably 15.0 mass% or less, even more preferably 10.0 mass% or less, and even more preferably 5.0 mass% or less, based on the total mass of the insulation coating treatment liquid in terms of solid content.

In addition, as mentioned above, it is preferable not to actively add chromate, and the content of chromate in the insulation coating treatment liquid is preferably not more than the impurity level. Specifically, the content of chromate in the insulation coating treatment liquid in terms of CrO₃ is preferably 0.1 mass% or less of the total mass of the insulation coating treatment liquid in terms of solid content.

In the above mixing process, a compound containing Si and/or K may be further mixed in. In this case, however, the K₂O/SiO₂ ratio contained in the insulation coating treatment liquid after mixing is preferably 0.5% or more and 10% or less.

In the method for producing an insulation coating treatment liquid according to the present embodiment, the analysis of the K₂O/SiO₂ ratio in the colloidal silica is performed as follows. The amount of K contained in the colloidal silica is measured by atomic absorption spectrophotometry and converted to the K₂O amount. The amount of Si contained in the colloidal silica is determined by an elemental analysis method such as ICP and converted into the SiO₂ amount. Then, the ratio of K₂O/SiO₂ can be calculated from the obtained amounts of K₂O and SiO₂ and expressed as a percentage.

### <Method for producing grain-oriented electrical steel sheet>

Next, the method for producing a grain-oriented electrical steel sheet according to the present embodiment is described. The method for producing a grain-oriented electrical steel sheet (insulation coating treatment method) of the present embodiment includes a coating process in which an insulation coating treatment liquid is applied to the surface of the steel sheet and a baking process in which the insulation coating treatment liquid is baked. By baking, an insulation coating is formed.

In the method for producing a grain-oriented electrical steel sheet according to the present embodiment, the steel sheet on which the insulation coating is formed may be a normal grain-oriented electrical steel sheet with a forsterite film or a grain-oriented electrical steel sheet without a forsterite film. In either case, after final annealing followed by rinsing to remove excess annealing separator, the grain-oriented electrical steel sheet is subjected to pickling in a sulfuric acid bath or the like, and then rinsing in water. After the surface of the steel sheet is cleaned and activated in this manner, an insulation coating treatment liquid is applied to the steel sheet in the coating process. The grain-oriented electrical steel sheet coated with the insulation coating treatment liquid is then subjected to a baking process under the conditions described below to form an insulation coating on the surface.

In the baking process, the grain-oriented electrical steel sheet coated with the insulation coating treatment liquid is heated to the baking soaking temperature, held at the baking soaking temperature, and then cooled. The baking soaking temperature (°C) is the sheet temperature reached in the baking process (maximum sheet temperature) and must be 800°C or higher and 1000°C or lower. If the baking soaking temperature is less than 800°C, the insulation coating may not impart sufficient tension to the steel sheet. On the other hand, if the baking soaking temperature exceeds 1000°C, cracks may appear in the insulation coating, resulting in a decrease in coating tension, insulation properties, etc., and defects may also appear on the steel sheet. The baking soaking temperature is more preferably 850°C or higher and 950°C or lower.

The soaking holding time (seconds) indicates the holding time at the baking soaking temperature. The soaking holding time is to be 10 seconds or more. If the soaking holding time is less than 10 seconds, baking of the insulation coating is insufficient and the moisture absorption resistance may deteriorate (the amount of moisture absorption may increase). The soaking holding time is desirably 20 seconds or more. On the other hand, the soaking holding time is to be 60 seconds or less. If the soaking holding time is longer than 60 seconds, not only does the moisture absorption resistance hardly change, but excessive crystallization of the insulation coating may cause cracks and reduce the coating tension. The soaking holding time is more preferably 45 seconds or less to achieve necessary and sufficient coating properties.

The type of steel sheet to which the above insulation coating treatment is applied is not limited. The reason is that the main feature of the grain-oriented electrical steel sheet of the present embodiment is the composition of the insulation coating, and the effects of the insulation coating of the grain-oriented electrical steel sheet of the present embodiment, namely, the ability to impart a large tension to the surface of the steel sheet; good adhesion, corrosion resistance and productivity; and good moisture absorption resistance, even when the chromate is not included, can be achieved regardless of the type of steel sheet.

Preferably, the above-mentioned insulation coating treatment can be applied to grain-oriented electrical steel sheets, such as those produced using the technology disclosed in, for example, JP7-268567A, thereby making it possible to obtain a further effect of reducing iron loss. The above insulation coating treatment can further reduce iron loss by applying the above insulation coating treatment, specifically, to a grain-oriented electrical steel sheet containing at least C: 0.005% or less and Si: 2.5 to 7.0% by mass, and optionally further containing other alloying elements within the ranges not impairing the properties (e.g., Mn: 0 to 1.0%, Al: 0 to 0.03%, N: 0.01% or less, P: 0.01% or less, and S: 0.01% or less), and the balance Fe and impurities, and having an average grain size of 1 to 10 mm, and an average angle of 8° or less between the (110) [001] crystal orientation and the rolling direction.

Although there is no particular limit to the coating amount of the insulation coating of the grain-oriented electrical steel sheet produced by the method for producing a grain-oriented electrical steel sheet according to the present embodiment, the coating amount of 2.0 to 7.0 g/m² is suitable. If the coating amount of the insulation coating is less than 2.0 g/m², it becomes difficult to impart high tension to the grain-oriented electrical steel sheet, and the insulation properties and corrosion resistance of the grain-oriented electrical steel sheet may also deteriorate, which is undesirable. On the other hand, if the coating amount of the insulation coating is more than 7.0 g/m², the space factor of the grain-oriented electrical steel sheet may decrease, resulting in a deterioration of the transformer characteristics, which is undesirable. The coating amount of the insulation coating is preferably 3.0 g/m² or more, and even more preferably 4.0 g/m² or more. The coating amount of the insulation coating is preferably 6.0 g/m² or less, and even more preferably 5.0 g/m² or less.

### EXAMPLE

Next, the effects of an embodiment of the present invention will be described in more concrete detail by means of examples. The conditions in the examples are examples of conditions adopted to confirm the feasibility and effects of the present invention, and the present invention is not limited to these examples of conditions. Various conditions may be employed in the present invention as long as they do not depart from the gist of the present invention and achieve the purpose of the present invention.

A slab containing, by mass%, C: 0.082%, Si: 3.25%, Mn: 0.084%, sol.Al: 0.026%, N: 0.0088%, P: 0.008%, and S: 0.023%, with the balance being Fe and impurities was cast, heated to 1150°C, and subjected to hot rolling to prepare a hot-rolled steel sheet with a thickness of 2.6 mm. The hot-rolled steel sheet was then annealed as necessary, and cold-rolled once, or several times with intermediate annealing, to obtain a cold-rolled steel sheet with a final thickness of 0.23 mm. The cold-rolled steel sheet underwent decarburization annealing and nitriding in an ammonia-containing atmosphere during the temperature reduction step. Known conditions were used in the processes, from slab heating to nitriding.

An annealing separator consisting mainly of MgO was applied to the decarburization-annealed sheet after decarburization annealing described above and left to dry. The decarburization-annealed sheet coated with the annealing separator was subjected to final annealing at 1200°C for 20 hours.

After that, the excess annealing separator was rinsed off with a scrubber, and then the insulation coating treatment liquids with the components adjusted as shown in Table 1 were applied and baked under the conditions shown in Table 2 to form insulation coatings.

### [Table 1]

**Table 1**

| Treatment liquid No. | Insulation coating treatment liquid | | | | | | | | | | |
|---|---|---|---|---|---|---|---|---|---|---|---|
| | Metal phosphate | | | Colloidal silica | | | | | Chromate | Inorganic compound | |
| | Metal | Metal ratio (mol ratio) | Content (mass%) | K₂O/SiO₂ ratio (%) | Content (mass%) | SiO₂ amount (mass%) | Na₂O amount (mass%) | K₂O amount (mass%) | Content (mass%) | Type | Content (mass%) |
| A1 | Al | 100 | 74.8 | 0.5 | 25.2 | 25.0 | 0.08 | 0.13 | - | - | - |
| A2 | Al | 100 | 72.4 | 2 | 27.6 | 27.0 | 0.09 | 0.54 | - | - | - |
| A3 | Al | 100 | 63.8 | 3 | 36.2 | 35.0 | 0.14 | 1.1 | - | - | - |
| A4 | Al | 100 | 52.6 | 5 | 47.4 | 45.0 | 0.19 | 2.3 | - | - | - |
| A5 | Al | 100 | 46.8 | 6 | 53.2 | 50.0 | 0.23 | 3.0 | - | - | - |
| A6 | Al | 100 | 37.2 | 8 | 62.8 | 58.0 | 0.19 | 4.6 | - | - | - |
| A7 | Al | 100 | 28.3 | 10 | 71.7 | 65.0 | 0.21 | 6.5 | - | - | - |
| A8 | Al | 100 | 47.4 | 5 | 50.6 | 48.0 | 0.20 | 2.4 | - | Boric acid | 2.0 |
| A9 | Al | 100 | 47.4 | 5 | 50.6 | 48.0 | 0.18 | 2.4 | - | Sodium borate | 2.0 |
| A10 | Al | 100 | 47.4 | 5 | 50.6 | 48.0 | 0.17 | 2.4 | - | Titanium oxide | 2.0 |
| A11 | Al | 100 | 47.5 | 5 | 50.5 | 48.0 | 0.14 | 2.4 | - | Molybdenum oxide | 2.0 |
| A12 | Al | 100 | 47.4 | 5 | 50.6 | 48.0 | 0.18 | 2.4 | - | Barium titanate | 2.0 |
| A13 | Al / Fe | 80 / 20 | 49.4 | 5 | 50.6 | 48.0 | 0.20 | 2.4 | - | - | - |
| A14 | Al / Mg | 80 / 20 | 49.4 | 5 | 50.6 | 48.0 | 0.18 | 2.4 | - | - | - |
| A15 | Al / Mn | 80 / 20 | 49.4 | 5 | 50.6 | 48.0 | 0.17 | 2.4 | - | - | - |
| A16 | Al / Ni | 80 / 20 | 49.4 | 5 | 50.6 | 48.0 | 0.22 | 2.4 | - | - | - |
| A17 | Al / Zn | 80 / 20 | 49.4 | 5 | 50.6 | 48.0 | 0.20 | 2.4 | - | - | - |
| A18 | Al / Co | 80 / 20 | 49.4 | 5 | 50.6 | 48.0 | 0.20 | 2.4 | - | - | - |
| A19 | Al / Mo | 80 / 20 | 49.4 | 5 | 50.6 | 48.0 | 0.18 | 2.4 | - | - | - |
| A20 | Al / V | 80 / 20 | 49.4 | 5 | 50.6 | 48.0 | 0.21 | 2.4 | - | - | - |
| A21 | Al / W | 80 / 20 | 49.4 | 5 | 50.6 | 48.0 | 0.18 | 2.4 | - | - | - |
| A22 | Al / Zr | 80 / 20 | 49.4 | 5 | 50.6 | 48.0 | 0.20 | 2.4 | - | - | - |
| a1 | Al | 100 | 51.6 | 0.4 | 48.4 | 48.0 | 0.22 | 0.20 | - | - | - |
| a2 | Al | 100 | 46.1 | 12 | 53.9 | 48.0 | 0.15 | 5.8 | - | - | - |
| a3 | Al | 100 | 41.7 | 0.2 | 48.3 | 48.0 | 0.16 | 0.10 | 10.0 | - | - |

### [Table 2]

**Table 2**

| Producing method No. | Baking process | |
|---|---|---|
| | Soaking temperature | Holding time |
| | (°C) | (sec) |
| B1 | 800 | 30 |
| B2 | 1000 | 30 |
| B3 | 850 | 10 |
| B4 | 850 | 60 |
| B5 | 850 | 30 |
| B6 | 870 | 30 |
| B7 | 950 | 30 |
| b1 | 750 | 30 |
| b2 | 1050 | 30 |
| b3 | 850 | 5 |
| b4 | 850 | 90 |

### [Amount of moisture absorption]

The amount of moisture absorption of the resulting grain-oriented electrical steel sheet with an insulation coating was measured using the method described above.

### [Appearance]

The appearance of the insulation coating after baking was evaluated. The appearance of the insulation coating after baking was judged by visual inspection based on the presence or absence of clouding of the insulation coating. A non-clouded area ratio of less than 10% of the coating surface was rated as "Very Good," 10% to less than 20% was rated as "Good," and 20% or more was rated as "Poor." When the surface of the clouded sample was observed using an SEM, fine cracks were found in the coating. Therefore, it is considered that the occurrence of cracks causes diffuse reflection of light, which causes the sample to be observed as cloudy.

The results of these evaluations are shown in Tables 3 to 5.

### [Table 3]

**Table 3**

| Test No. | Treatment liquid No. | Producing method No. | Property evaluation | | |
|---|---|---|---|---|---|
| | | | Amount of moisture absorption (g/m²) | Appearance after baking | |
| C1 | A1 | B5 | 0.96 | good | Inventive example |
| C2 | A2 | B5 | 0.41 | good | |
| C3 | A3 | B5 | 0.06 | good | |
| C4 | A4 | B5 | 0.04 | very good | |
| C5 | A5 | B5 | 0.04 | very good | |
| C6 | A6 | B5 | 0.05 | good | |
| C7 | A7 | B5 | 0.04 | good | |
| C8 | A8 | B5 | 0.05 | very good | |
| C9 | A9 | B5 | 0.06 | very good | |
| C10 | A10 | B5 | 0.05 | very good | |
| C11 | A11 | B5 | 0.04 | very good | |
| C12 | A12 | B5 | 0.05 | very good | |
| C13 | A13 | B5 | 0.05 | very good | |
| C14 | A14 | B5 | 0.04 | very good | |
| C15 | A15 | B5 | 0.05 | very good | |
| C16 | A16 | B5 | 0.06 | very good | |
| C17 | A17 | B5 | 0.05 | very good | |
| C18 | A18 | B5 | 0.04 | very good | |
| C19 | A19 | B5 | 0.06 | very good | |
| C20 | A20 | B5 | 0.04 | very good | |
| C21 | A21 | B5 | 0.05 | very good | |
| C22 | A22 | B5 | 0.05 | very good | |
| c1 | a1 | B5 | 1.10 | good | Comparative example |
| c2 | a2 | B5 | 0.03 | poor | |
| c3 | a3 | B5 | 0.01 | good | |

### [Table 4]

**Table 4**

| Test No. | Treatment liquid No. | Producing method No. | Property evaluation | | |
|---|---|---|---|---|---|
| | | | Amount of moisture absorption (g/m²) | Appearance after baking | |
| D1 | A4 | B1 | 0.07 | good | Inventive example |
| D2 | A4 | B2 | 0.04 | good | |
| D3 | A4 | B3 | 0.82 | good | |
| D4 | A4 | B4 | 0.04 | good | |
| D5 | A4 | B5 | 0.03 | very good | |
| D6 | A4 | B6 | 0.04 | very good | |
| D7 | A4 | B7 | 0.03 | good | |
| d1 | A4 | b1 | 1.29 | good | Comparative example |
| d2 | A4 | b2 | 0.04 | poor | |
| d3 | A4 | b3 | 1.41 | good | |
| d4 | A4 | b4 | 0.05 | poor | |

### [Table 5]

**Table 5**

| Test No. | Producing met hod No. | Insulation coating treatment liquid | | | | | | | | | Property evaluation | | |
|---|---|---|---|---|---|---|---|---|---|---|---|---|---|
| | | Metal phosphate | | Colloidal silica | | | | | | Chromate | Amount of moisture absorption (g/m²) | Appearance after baking | |
| | | Metal | Content (mass%) | K₂O/SiO₂ ratio (%) | Average particle diameter (nm) | Content (mass%) | SiO₂ amount (mass%) | Na₂O amount (mass%) | K₂O amount (mass%) | | | | |
| E1 | B5 | Al | 49.4 | 5 | 4 | 50.6 | 48.0 | 0.21 | 2.4 | - | 0.04 | very good | Inventive example |
| E2 | B5 | Al | 49.4 | 5 | 12 | 50.6 | 48.0 | 0.22 | 2.4 | - | 0.05 | very good | |
| E3 | B5 | Al | 49.4 | 5 | 18 | 50.6 | 48.0 | 0.20 | 2.4 | - | 0.04 | good | |
| E4 | B5 | Al | 49.4 | 5 | 22 | 50.6 | 48.0 | 0.21 | 2.4 | - | 0.03 | good | |
| E5 | B5 | Al | 49.4 | 5 | 31 | 50.6 | 48.0 | 0.22 | 2.4 | - | 0.05 | good | |
| E6 | B6 | Al | 49.4 | 5 | 35 | 50.6 | 48.0 | 0.20 | 2.4 | - | 0.04 | good | |

As can be seen from Tables 3 to 5, in the inventive examples, the method for producing an insulation coating treatment liquid satisfied the specified ranges of the present invention, and the grain-oriented electrical steel sheet on which the insulation coating was formed using the insulation coating treatment liquid of the inventive example had good moisture absorption resistance and excellent coating appearance.

In contrast, in the comparative examples, at least one item in the method for producing an insulation coating treatment liquid was outside the scope of the present invention, and the moisture absorption resistance or the appearance of the insulation coating of the grain-oriented electrical steel sheet was inferior.

## Claims

1. A method for producing an insulation coating treatment liquid for a grain-oriented electrical steel sheet, comprising:
an adjusting process in which a K compound is added to colloidal silica to adjust a K₂O/SiO₂ ratio in mass% between an amount of K in terms of K₂O and an amount of Si in terms of SiO₂ in the colloidal silica to 0.5% or more and 10% or less, and
a mixing process in which the colloidal silica having the K₂O/SiO₂ ratio adjusted and metal phosphate of one or more metals selected from among Al, Fe, Mg, Mn, Ni, Zn, Co, Mo, V, W, and Zr are mixed.

2. A method for producing a grain-oriented electrical steel sheet, comprising:
a coating process in which an insulation coating treatment liquid is applied to a surface of a steel sheet, and
a baking process in which the insulation coating treatment liquid is baked to form an insulation coating,
wherein the insulation coating treatment liquid is the insulation coating treatment liquid for a grain-oriented electrical steel sheet produced by the method according to claim 1, and
wherein in the baking process, the baking soaking temperature is 800 to 1000°C and the soaking holding time is 10 to 60 seconds.
